# EUROPÄISCHE PATENTSCHRIFT

(11) **EP 3 016 998 B1**
(45) Veröffentlichungstag und Bekanntmachung des Hinweises auf die Patenterteilung: **03.01.2024**
(21) Anmeldenummer: 14729936.6
(22) Anmeldetag: 16.06.2014
(51) Int. Cl.: C08J 11/08, B29B 17/02

(54) **VERFAHREN ZUR ANREICHERUNG VON MINDESTENS EINEM POLYMER AUS EINEM POLYMER-HALTIGEN ABFALL UND POLYMER-RECYCLAT**
METHOD FOR INCREASING THE CONCENTRATION OF AT LEAST ONE POLYMER FROM A POLYMER-CONTAINING WASTE MATERIAL, AND POLYMER RECYCLATE
PROCÉDÉ D'ENRICHISSEMENT D'AU MOINS UN POLYMÈRE PRÉSENT DANS DES DÉCHETS CONTENANT DES POLYMÈRES ET POLYMÈRES RECYCLÉS

(30) Priorität: 01.07.2013 DE 102013212813
(43) Veröffentlichungstag der Anmeldung: 11.05.2016
(73) Patentinhaber: Fraunhofer-Gesellschaft zur Förderung der angewandten Forschung e.V., 80686 München (DE)
(72) Erfinder: MÄURER, Andreas, 85354 Freising (DE); SCHLUMMER, Martin, 85051 Ingolstadt (DE); SIEBERT, Tanja, 85356 Freising (DE)
(74) Vertreter: Pfenning, Meinig & Partner mbB
(86) Internationale Anmeldenummer: PCT/EP2014/062559
(87) Internationale Veröffentlichungsnummer: WO 2015/000681

(56) Entgegenhaltungen:
- EP-A2- 1 057 854
- WO-A1-91/03515
- WO-A1-94/07950
- CN-A- 102 199 310
- JP-A- 2007 284 531

## Beschreibung

Gegenstand der Erfindung ist ein lösungsmittelbasiertes Kunststoffrecyclingverfahren, mit dem Polymere aus polymerhaltigen Kunststoffabfallen zurückgewonnen werden können. Das Verfahren basiert auf dem Einsatz eines mit einem Thermostabilisator dotierten Lösungsmittels, mit dem Polymere in Form einer Fest-Flüssig-Extraktion aus dem Kunststoffabfall bei Temperaturen über 70 °C extrahiert werden. Durch das vorgestellte Verfahren können Polymer-Recyclate bereitgestellt werden, die verbesserte mechanische Eigenschaften gegenüber herkömmlichen recycelten Polymeren aufweisen. Es wird weiterhin die Verwendung von mindestens einem Thermostabilisator in mindestens einem organischen Lösungsmittel zur lösungsmittelbasierten Isolierung von mindestens einem Polymer aus einem Polymer-haltigen Abfall vorgeschlagen.

LLDPE, LDPE, HDPE, PP, ABS, PS, EPS, PA, PC, PC/ABS und PET gehören zu den weitverbreiteten Polymertypen. Diese finden in den verschiedensten Produkten Verwendung und sind daher Bestandteil vieler "postconsumer" Abfälle. So entstehen u.a. bei der Verwertung und Aufbereitung von Elektroaltgeräten, Altautos, Verpackungsabfällen und Kunststofffraktionen mit hohem Anteil an diesen Polymere.

Die Trennung von Polymeren aus Abfallfraktionen wird häufig über dichtebasierten Technologien vorgenommen, allerdings ist der Dichtebereich der einzelnen Polymere aufgrund einer Vielzahl verwendeter Additive sehr breit und daher nur bei guter Kenntnis der Input-Qualitäten ausreichend spezifisch.

Zudem ist die dichtebasierte Abfallaufbereitung von Abfällen mit Folien vergleichsweise schwierig. Alternativ werden spektroskopische Sortierverfahren angewendet, diese scheitern in der Regel aber bei folienreichen Abfällen, da die automatische Sortierung in der Regel über Druckluftleisten erfolgt, deren Zuverlässigkeit bei geringer Partikelgröße und Partikelgewicht und auch mit zunehmender Flächigkeit abnimmt.

Daher wurden bereits im Vergangenen Jahrhundert lösungsmittelbasierte Kunststoffrecyclingtechnologien entwickelt. US 5,278,282 A beschreibt sehr umfangreich u.a. das Recycling von Polymeren aus Polymermischungen mithilfe verschiedener Lösungsmittel. Ein ähnliches Vorfahren für komplexe Kunststoffabfalle mit zum Teil anderen Lösungsmitteln beschreibt US 6,329,436 B1.

Der Vorteil der lösungsmittelbasierten Verfahren liegt hierbei in der selektiven Lösung eines oder mehrerer Polymere aus einer komplexen Abfallmischung und der Möglichkeit diese Lösung mit mechanischen Mitteln weitestgehend von unlöslichen Bestandteilen zu trennen. In der Folge sind die entstehenden Polymer-Recyclate im Vergleich zu Produkten der vorgenannten dichtebasierten und spektroskopischen Techniken reiner.

Leider können aber nur selten neuwareähnliche Recyclatqualitäten erreicht werden, da die lösungsmittelbasierten Technologien den Kunststoffabfall einer nennenswerten Temperatur-Zeit-Belastung aussetzen. Dies ist insbesondere für Polyolefine (LLDPE, LDPE, HDPE, PP) der Fall, die überwiegend oberhalb von 100 °C gelöst werden können. Aber auch für PS, PC, PA und PET werden zum Teil sehr hohe Lösungstemperaturen von bis über 220°C beschrieben (US 5,278,282 A). Dies führt zu thermooxidativen Reaktionen im Kunststoffabfall, in deren Folge Polypropylen, PC, PET und PA z.B. teilweise abgebaut werden und durch den Molmassenverlust veränderte mechanische Eigenschaften wie geringere Schmelzeviskositaten (erhöhte MFR-Werte) aufweisen.

Für Polyethylen wird beschrieben, dass eine längere thermische Exposition zu einer erhöhten Gelbildung führt, d.h. Teilbereiche der PE-Matrix bilden infolge der thermooxidativen Primärschädigung eine Quervernetzung aus. Die entstandenen Gelbereiche weisen andere Lösungs- und Schmelzeigenschaften auf, die sich in verschlechterten mechanischen Eigenschaften und optischen Fehlstellen im Recyclat widerspiegeln.

Zur Unterdrückung der thermooxidativen Schädigung während der Extrusion wurden Thermostabilisatoren entwickelt, die sowohl bei der Neuwareproduktion als auch im Recycling durch Re-Extrusion Verwendung finden. So beschreibt WO 94/07950 A die erhöhte Recyclatqualität bei der Anwendung von Thermostabilisatoren bei der Re-Extrusion polyolefinhaltiger Kunststoffabfalle. Stellvertretend seien hier zwei sehr häufig eingesetzte Markenprodukte genannt:
- Irganox 1010: ein sterisch gehindertes phenolisches Antioxidanzmittel, das den thermooxidativen Abbau von Polymeren, Waxen und Ölen verhindert; und
- Irgafos 168: ein hydrolytisch stabiler phosphitbasierter sekundärer Prozessstabilisator.

Die EP 1 057 854 A2 offenbart ein Recyclingverfahren, das das Recycling eines hochwertigen regenerierten Styrolharzes ermöglicht.

Die JP 2007 284531 A offenbart ein Verfahren zum Entfernen von unlöslichem Material aus einer Polyvinylchloridlösung.

Die WO 91/03515 A1 offenbart ein Verfahren zum Abtrennen von Polymeren aus einer physikalisch vermischten festen Mischung, die eine Vielzahl von Polymeren enthält.

Ausgehend hiervon war es die Aufgabe der vorliegenden Erfindung, ein Verfahren zur Isolierung von Polymeren aus Polymer-haltigem Abfall bereitzustellen, welches eine gegenüber bekannten Verfahren geringere thermooxidative Schädigung der Polymere bewirkt.

Die Aufgabe wird gelöst durch das Verfahren zur Isolierung von mindestens einem Polymer aus einem Polymer-haltigen Abfall gemäß Anspruch 1. Die abhängigen Ansprüche zeigen vorteilhafte Ausführungsformen auf.

Erfindungsgemäß wird ein Verfahren zur Isolierung von mindestens einem Polymer aus einem Polymer-haltigem Abfall bereitgestellt, welches folgende Schritte umfasst:
a) Mischen von einem Polymer-haltigen Abfall mit einem organischen Lösungsmittel enthaltend mindestens einen Thermostabilisator für Polymere, wobei mindestens ein Polymer in dem organischen Lösungsmittel gelöst wird und ein unlöslicher Teil des Abfalls zurückbleibt, wobei das mindestens eine Polymer bei einer Temperatur von 70°C bis 200 °C gelöst wird;
b) zumindest teilweise Isolierung der Lösung enthaltend mindestens ein Polymer und mindestens einen Thermostabilisator von dem unlöslichen Teil des Abfalls;
c) zumindest teilweise Abtrennung des organischen Lösungsmittels von dem mindestens einen gefällten Polymer,
wobei der Thermostabilisator ausgewählt ist aus der Gruppe bestehend aus sterisch gehinderten Phenolen und organischen Phosphiten und Phosphoniten.

Es wurde gefunden, dass durch die Verwendung eines organischen Lösungsmittels mit einem Thermostabilisator als Extraktionsmittel, die thermooxidative Schädigung von Polymeren bei ihrer Extraktion aus Polymer-haltigem Abfall erheblich reduziert werden kann. Zum Einen kann somit die Verringerung der mittleren Molmasse der extrahierten Polymere eingeschränkt werden. Zum Anderen kann dadurch die Bildung von Quervernetzungen der Polymermoleküle d.h. Gelbildung verringert werden. Beide Effekte wirken sich positiv auf die mechanischen Eigenschaften der isolierten Polymere aus. Der im Stand der Technik bekannte negative Einfluss des Isolationsverfahrens auf die mechanischen Eigenschaften der isolierten Polyolefine ist damit möglichst gering.

Die Lösezeit in Schritt a) kann variiert werden und/oder an die Partikelgröße des behandelten Kunststoffabfalls angepasst werden.

Erfindungsgemäß wird das mindestens eine Polymer in dem erfindungsgemäßen Verfahren bei einer Temperatur von 70°C bis 200 °C gelöst.

Das organische Lösungsmittel kann einen oder mehrere Kohlenwasserstoffe enthalten oder daraus bestehen, bevorzugt Kohlenwasserstoffe mit einem Siedepunkt von 60 bis 250 °C, besonders bevorzugt 100 bis 220°C und ganz besonderes bevorzugt 130 bis 200°C.

Bevorzugt enthält der Polymer-haltige Abfall, der in dem Verfahren verwendet wird, mindestens ein Polymer ausgewählt aus der Gruppe bestehend aus LLDPE, LDPE, HDPE, PP, PET, PA, PC und Mischungen hiervon oder besteht aus diesen. Bevorzugt enthält der Polymer-haltige Abfall mindestens eine Folie oder besteht daraus.

Der Thermostabilisator ist erfindungsgemäß ausgewählt aus der Gruppe bestehend aus sterisch gehinderten Phenolen und organischen Phosphiten und Phosphoniten, bevorzugt sterisch gehinderten phenolischen Antioxidanzmitteln und phosphitbasierten sekundären Prozessstabilisatoren und deren Mischungen. Insbesondere enthält der Thermostabilisator keine Metalloxide, Metallhydroxide und/oder Metallcarbonate.

In Schritt b) des erfindungsgemäßen Verfahrens kann die Lösung über zumindest ein mechanisches Verfahren, bevorzugt eine Siebung und/oder Filtration, von dem unlöslichen Abfall isoliert werden.

Vorzugsweise wird nach der Isolierung der Lösung in Schritt b) eine Fällung des mindestens einen Polyolefins aus der Lösung vorgenommen. Dabei wird der Thermostabilisator zum großen Teil, d.h. mindestens 30 Gew.-%, bevorzugt mindestens 50 Gew.-%, jeweils bezogen auf die gesamte Menge an Thermostabilisator, mitgefällt.

In einer bevorzugten Ausführungsform erfolgt die Fällung des mindestens einen Polymeren aus der Lösung durch Absenken der Temperatur der Lösung, bevorzugt durch Absenken der Temperatur der Lösung auf <_ 80°C. Hierbei kann das ausgefällte Polymer einen Feststoffgehalt von 10 Gew.-% bis 40 Gew.-%, bevorzugt 20 Gew.-% bis Gew.-30 %, aufweisen. Optional kann die Fällung des mindestens einen Polymer durch Zugabe eines bei Lösetemperatur mischbaren Nichtlösers, z.B. aliphatische Alkohole, bewirkt werden.

In Schritt c) kann das mindestens eine gefällte Polymer von der Lösung mechanisch abgetrennt werden, bevorzugt abfiltriert und/oder abgepresst werden. Besonders bevorzugt ist eine Abtrennung bei einer Temperatur von 50 bis 150 °C und/oder über Anlegen eines Vakuums. Das Vakuum kann einen Druck von ≤ 100 mbar aufweisen.

Bevorzugt wird Schritt c) in einem Vakuumkneter, einem Entgasungsextruder und/oder in Form einer Pulvertrocknung durchgeführt.

In einer weiteren bevorzugten Ausführungsform des erfindungsgemäßen Verfahrens wird nach Schritt c) das Lösungsmittel wieder in Schritt a) verwendet. Bevorzugt wird das Lösungsmittel bei dem erfindungsgemäßen Verfahren im Kreis geführt d.h. wird permanent recycelt.

Optional kann in mindestens einem der Schritte des erfindungsgemäßen Verfahrens mindestens ein weiterer Thermostabilisator zugegeben werden.

in einer weiteren bevorzugten Ausführungsform des erfindungsgemäßen Verfahrens enthält der Polymer-haltige Abfall mehrere verschiedene Polymere. Bevorzugt werden die verschiedenen Polymere durch sukzessive Lösungsschritte mit steigender Lösungstemperatur gelöst und anschließend von den bei der jeweiligen Lösungstemperatur unlöslichen Polymeren und unlöslichem Teilen des Abfalls getrennt. Optional werden verschiedene Polymerfraktionen sukzessive mit dem gleichen Lösungsmittel-Thermostabilisator-Gemisch bei steigenden Lösungstemperaturen selektiv extrahiert.

Insbesondere wird in dem erfindungsgemäßen Verfahren weder ein dichtebasiertes Trennverfahren noch eine Trennung über Druckluftleisten noch eine Trennung über Dispergieren des Polymer-haltigen Abfalls in Wasser durchgeführt.

Desweiteren wird ein Polymer bereitgestellt, das mit dem erfindungsgemäßen Verfahren herstellbar bzw. isolierbar ist.

Das Polymer kann mindestens einen Thermostabilisator enthalten, bevorzugt in einer Konzentration von 0,01 bis 2 Gew.-%, besonders bevorzugt von 0,05 bis 0,5 Gew.-%.

Es wird die Verwendung von mindestens einem Thermostabilisator in mindestens einem organischen Lösungsmittel zur lösungsmittelbasierten Isolierung von mindestens einem Polymer aus einem Polymer-haltigen Abfall vorgeschlagen.

Anhand der nachfolgenden Figur und des nachfolgenden Beispiels soll der erfindungsgemäße Gegenstand näher erläutert werden, ohne diesen auf die hier gezeigten, spezifischen Ausgestaltungsformen einschränken zu wollen.

### Beispiel

10 g Polypropylen(PP)-Neuwaregranulat (Moplen HP420M) wurde im Ansatz A 30 Minuten bei 150°C in einem Becherglas in 90g eines paraffinischen Kohlenwasserstoffgemisches (CreaSolv^{®} PO), dem je 0,05% der Thermostabilisatoren Irganox 1010 und Irgafos 168 zugesetzt wurden, gelöst. In einem Parallelansatz B wurden jeweils 0,25% der beiden Thermostabilisatoren eingesetzt, im Parallelansatz C jeweils 0,5%. In Parallelansatz D wurden keine Thermostabilisatoren verwendet.

Anschließend wurden die Lösungen unter Rühren auf unter 80 °C gekühlt, wobei eine Dispersion gefällter PP-Partikel entsteht. Die PP-Partikel werden abfiltriert und anschließend 10 Stunden bei 80 °C im Vakuumtrockenschrank bei 100 mbar getrocknet.

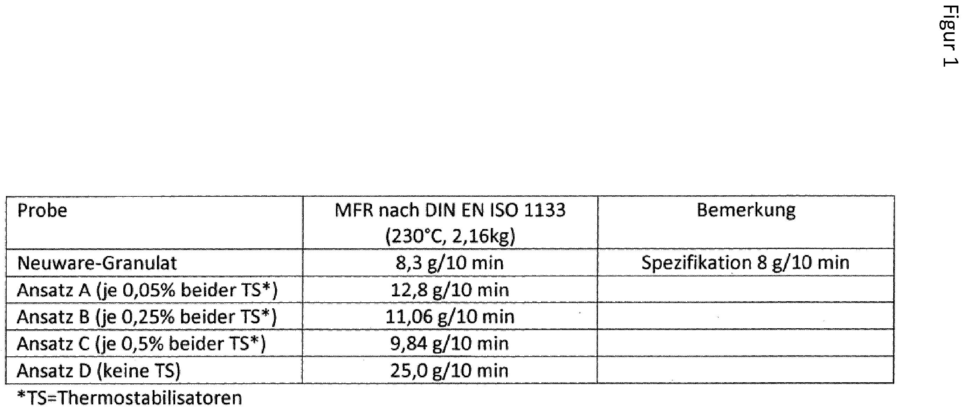

Nach DIN EN ISO 1133 wurde die Schmelze-Massefließsrate (MFR) des Ausgangsgranulats sowie der getrockneten Produkte der Ansätze A-D bestimmt (siehe Figur 1).

Die in der Figur 1 aufgelisteten MFR-Werte belegen die Vorteilhaftigkeit der Zugabe von Thermostabilisatoren, die einen thermooxidativen Abbau des PP vermeiden und somit die in Ansatz D sichtbare abbaubedingte Erhöhung der MFR unterdrücken.

## Patentansprüche

1. Verfahren zur Anreicherung von mindestens einem Polymer aus einem Polymer-haltigen Abfall, welches folgende Schritte umfasst:
a) Mischen des Polymer-haltigen Abfalls mit einem organischen Lösungsmittel enthaltend mindestens einen Thermostabilisator für Polymere, wobei mindestens ein Polymer in dem organischen Lösungsmittel gelöst wird und ein unlöslicher Teil des Abfalls zurückbleibt, wobei das mindestens eine Polymer bei einer Temperatur von 70°C bis 200 °C gelöst wird;
b) zumindest teilweise Abtrennung der Lösung enthaltend mindestens ein Polymer und mindestens einen Thermostabilisator von dem unlöslichen Teil des Abfalls;
c) zumindest teilweise Abtrennung des organischen Lösungsmittels von dem mindestens einen Polymer,
wobei der Thermostabilisator ausgewählt ist aus der Gruppe bestehend aus sterisch gehinderten Phenolen und organischen Phosphiten und Phosphoniten.

2. Verfahren gemäß dem vorhergehenden Anspruch, **dadurch gekennzeichnet, dass** das organische Lösungsmittel einen oder mehrere Kohlenwasserstoffe enthält oder daraus besteht, bevorzugt Kohlenwasserstoffe mit einem Siedepunkt von 60 bis 250 °C, bevorzugt 100 bis 220°C und besonders bevorzugt 130 bis 200°C.

3. Verfahren gemäß einem der vorhergehenden Ansprüche, **dadurch gekennzeichnet, dass** der Polymer-haltige Abfall mindestens ein Polymer ausgewählt aus der Gruppe bestehend aus LLDPE, LDPE, HDPE, PP, PET, PA, PC und Mischungen hiervon enthält.

4. Verfahren gemäß einem der vorhergehenden Ansprüche, **dadurch gekennzeichnet, dass** der Thermostabilisator ausgewählt ist aus der Gruppe bestehend aus sterisch gehinderten phenolischen Antioxidanzmitteln und phosphitbasierten sekundären Prozessstabilisatoren und deren Mischungen.

5. Verfahren gemäß einem der vorhergehenden Ansprüche, **dadurch gekennzeichnet, dass** in Schritt b) die Lösung über zumindest ein mechanisches Verfahren, bevorzugt eine Siebung und/oder Filtration, von dem unlöslichen Abfall isoliert wird.

6. Verfahren gemäß einem der vorhergehenden Ansprüche, **dadurch gekennzeichnet, dass** nach der Isolierung der Lösung in Schritt b) eine Fällung des mindestens einen Polymers aus der Lösung erfolgt, wobei bevorzugt der mindestens eine Thermostabilisator im Wesentlichen mitgefällt wird.

7. Verfahren gemäß einem der vorhergehenden Ansprüche, **dadurch gekennzeichnet, dass** die Fällung des mindestens einen Polymers aus der Lösung durch Absenken der Temperatur der Lösung, bevorzugt durch Absenken der Temperatur der Lösung auf ≤ 80°C, erfolgt, wobei insbesondere das ausgefällte Polymer einen Feststoffgehalt von 10 % bis 40 %, bevorzugt 20 % bis 30 %, aufweist.

8. Verfahren gemäß einem der vorhergehenden Ansprüche, **dadurch gekennzeichnet, dass** in Schritt c) das mindestens eine gefällte Polymer von der Lösung mechanisch abgetrennt wird, bevorzugt abfiltriert und/oder abgepresst wird, besonders bevorzugt bei einer Temperatur von 50 bis 150 °C und/oder über Anlegen eines Vakuums, insbesondere eines Vakuums mit einem Druck von ≤ 100 mbar.

9. Verfahren gemäß einem der vorhergehenden Ansprüche, **dadurch gekennzeichnet, dass** Schritt c) in einem Vakuumkneter, einem Entgasungsextruder und/oder in Form einer Pulvertrocknung durchgeführt wird.

10. Verfahren gemäß einem der vorhergehenden Ansprüche, **dadurch gekennzeichnet, dass** nach Schritt c) das Lösungsmittel wieder in Schritt a) verwendet wird und/oder das Lösungsmittel bevorzugt im Kreis geführt wird.

11. Verfahren gemäß einem der vorhergehenden Ansprüche, **dadurch gekennzeichnet, dass** in mindestens einem der Schritte mindestens ein weiterer Thermostabilisator zugegeben wird.

12. Verfahren gemäß einem der vorhergehenden Ansprüche, **dadurch gekennzeichnet, dass** der Polymer-haltige Abfall mehrere verschiedenen Polymere enthält oder daraus besteht, wobei bevorzugt die verschiedenen Polyolefine durch sukzessive Lösungsschritte mit steigender Lösungstemperatur gelöst werden und anschließend von den bei derjeweiligen Lösungstemperatur unlöslichen Polymeren und unlöslichem Teil des Abfalls getrennt werden.

## Claims

1. Method for enriching at least one polymer from a polymer-containing waste, which comprises the following steps:
a) mixing the polymer-containing waste with an organic solvent comprising at least one thermostabiliser for polymers, wherein the at least one polymer is dissolved in the organic solvent and an insoluble part of the waste is left behind, wherein the at least one polymer is dissolved at a temperature of 70° to 200°C;
b) at least partial separation of the solution comprising at least one polymer and at least one thermostabiliser from the insoluble part of the waste;
c) at least partial separation of the organic solvent from the at least one polymer,
wherein the thermostabiliser is selected from the group consisting of sterically hindered phenols and organic phosphites and phosphonites.

2. Method according to the preceding claim, **characterised in that** the organic solvent comprises one or more hydrocarbons or consists thereof, preferably hydrocarbons with a boiling point of 60 to 250°C, preferably 100 to 220°C and particularly preferably 130 to 200°C.

3. Method according to one of the preceding claims, **characterised in that** the polymer-containing waste comprises at least one polymer selected from the group consisting of LLDPE, LDPE, HDPE, PP, PET, PA, PC, and mixtures hereof.

4. Method according to one of the preceding claims, **characterised in that** the thermostabiliser is selected from the group consisting of sterically hindered phenolic antioxidants and phosphite-based secondary process stabilisers, and mixtures thereof.

5. Method according to one of the preceding claims, **characterised in that**, in step b), the solution is isolated from the insoluble waste via at least one mechanical method, preferably sieving and/or filtration.

6. Method according to one of the preceding claims, **characterised in that**, after isolation of the solution in step b), a precipitation of the at least one polymer from the solution is effected, preferably the at least one thermostabiliser being essentially jointly precipitated.

7. Method according to one of the preceding claims, **characterised in that** precipitation of the at least one polymer from the solution is effected by lowering the temperature of the solution, preferably by lowering the temperature of the solution to ≤ 80°C, in particular the precipitated polymer having a solid content of 10% to 40%, preferably 20% to 30%.

8. Method according to one of the preceding claims, **characterised in that**, in step c), the at least one precipitated polymer is separated mechanically from the solution, preferably filtered off and/or pressed off, particularly preferably at a temperature of 50 to 150°C and/or by applying a vacuum, in particular a vacuum with a pressure of ≤ 100 mbar.

9. Method according to one of the preceding claims, **characterised in that** step c) is implemented in a vacuum kneader, in a degassing extruder and/or in the form of a powder drying.

10. Method according to one of the preceding claims, **characterised in that**, after step c), the solvent is used again in step a) and/or the solvent is preferably guided in circulation.

11. Method according to one of the preceding claims, **characterised in that** at least one further thermostabiliser is added in at least one of the steps.

12. Method according to one of the preceding claims, **characterised in that** the polymer-containing waste comprises a plurality of different polymers or consists thereof, preferably the various polyolefins being dissolved by successive dissolving steps with an increasing solubility temperature and subsequently being separated from the insoluble polymers and insoluble part of the waste at the respective solubility temperature.

## Revendications

1. Procédé d'enrichissement d'au moins un polymère à partir d'un déchet contenant un polymère, qui comprend les étapes suivantes :
a) mélanger les déchets contenant des polymères avec un solvant organique contenant au moins un stabilisateur thermique pour polymères, au moins un polymère étant dissous dans le solvant organique et une partie insoluble des déchets restant en l'état, ledit au moins un polymère étant dissous à une température de 70 °C à 200 °C ;
b) séparation au moins partielle de la solution contenant au moins un polymère et au moins un stabilisateur thermique de la partie insoluble des déchets ;
c) séparation au moins partielle du solvant organique du au moins un polymère,
dans lequel le stabilisateur thermique est choisi dans le groupe constitué par les phénols stériquement encombrés et les phosphites et phosphonites organiques.

2. Procédé selon la revendication précédente, **caractérisé en ce que** le solvant organique contient ou est constitué d'un ou plusieurs hydrocarbures, de préférence des hydrocarbures ayant un point d'ébullition de 60 à 250 °C, de préférence de 100 à 220 °C et de manière particulièrement préférée de 130 à 200 °C.

3. Procédé selon l'une quelconque des revendications précédentes, **caractérisé en ce que** les déchets contenant des polymères contiennent au moins un polymère choisi dans le groupe constitué par le LLDPE, le LDPE, le HDPE, le PP, le PET, le PA, le PC et leurs mélanges.

4. Procédé selon l'une quelconque des revendications précédentes, **caractérisé en ce que** le stabilisateur thermique est choisi dans le groupe constitué par les antioxydants phénoliques stériquement encombrés et les stabilisateurs de procédé secondaires à base de phosphite et leurs mélanges.

5. Procédé selon l'une quelconque des revendications précédentes, **caractérisé en ce que**, à l'étape b), la solution est isolée du déchet insoluble par au moins un procédé mécanique, de préférence un tamisage et/ou une filtration.

6. Procédé selon l'une quelconque des revendications précédentes, **caractérisé en ce que**, après l'isolement de la solution dans l'étape b), on réalise une précipitation dudit au moins un polymère à partir de la solution, de préférence en précipitant essentiellement en même temps ledit au moins un stabilisateur thermique.

7. Procédé selon l'une quelconque des revendications précédentes, **caractérisé en ce que** la précipitation dudit au moins un polymère à partir de la solution est réalisée en abaissant la température de la solution, de préférence en abaissant la température de la solution à ≤ 80 °C, le polymère précipité présentant en particulier une teneur en matières solides comprise entre 10 % et 40 %, de préférence entre 20 % et 30 %.

8. Procédé selon l'une quelconque des revendications précédentes, **caractérisé en ce que**, dans l'étape c), ledit au moins un polymère précipité est séparé mécaniquement de la solution, de préférence filtré et/ou pressé, de manière particulièrement préférée à une température de 50 à 150 °C et/ou par application d'un vide, en particulier d'un vide à une pression de ≤ 100 mbars.

9. Procédé selon l'une quelconque des revendications précédentes, **caractérisé en ce que** l'étape c) est réalisée dans un malaxeur sous vide, une extrudeuse de dégazage et/ou par séchage de poudre.

10. Procédé selon l'une quelconque des revendications précédentes, **caractérisé en ce qu'**après l'étape c), le solvant est réutilisé à l'étape a) et/ou le solvant est de préférence recyclé.

11. Procédé selon l'une quelconque des revendications précédentes, **caractérisé en ce qu'**au moins un autre stabilisateur thermique est ajouté dans au moins une des étapes.

12. Procédé selon l'une des revendications précédentes, **caractérisé en ce que** les déchets contenant des polymères contiennent ou sont constitués de plusieurs polymères différents, de préférence les différentes polyoléfines étant dissoutes par des dissolutions successives à une température supérieure à des températures de dissolution croissantes, puis séparés à la température de dissolution correspondante des polymères insolubles et de la partie insoluble des déchets.
